# EUROPEAN PATENT APPLICATION

(11) **EP 4 560 351 A1**
(43) Date of publication of application: **28.05.2025**
(21) Application number: 23211949.5
(22) Date of filing: 24.11.2023
(51) Int. Cl.: G01S 7/40, G01S 13/58, G08G 1/054, G01S 13/92

(54) **RADAR DEVICE USED IN SPEED CAMERA**

(30) Priority: 23.11.2023 KR 20230164268
(71) Applicant: Smart Radar System, Inc., Seongnam-si, Gyeonggi-do 13496 (KR)
(72) Inventor: Kim, Yong Jae, 16802 Yongin-si, Gyeonggi-do (KR); Kim, Keun Hwan, 16853 Yongin-si, Gyeonggi-do (KR)
(74) Representative: Grünecker Patent- und Rechtsanwälte PartG mbB

(57) **Abstract**

A speed camera-assisting radar device determines an installation angle using a gravity sensor, determines a speed measurement section appropriate for the installation angle, and automatically sets a radar parameter appropriate for the speed measurement section.

## Description

### BACKGROUND OF THE INVENTION

### Field of the Invention

The present invention relates to a device for measuring a speed using radar, and more particularly to a device used in conjunction with a speed camera to measure a speed of a vehicle in a speed trap area.

### Description of the Related Art

To prevent traffic accidents caused by speeding, speed control devices are used to control speeding by measuring speeds of vehicles traveling on the road.

These speed control devices are broadly classified into loop detector type, laser type, and radar type.

In the case of the loop detector type, a camera is installed on a high structure and a loop-shaped magnetic field sensor is buried at the beginning and end of a section to be controlled, and a speed of a vehicle is calculated by measuring a time which the vehicle takes to pass through the section. However, since the loop-shaped magnetic field sensor needs to be buried in each lane to control multiple lanes, vehicle traffic is interrupted during a burial period, and maintenance is difficult due to burial.

The laser type is a type in which a speed is calculated by firing laser at a vehicle and then measuring reflection thereof. Even though the laser type has an advantage of being able to detect speeding vehicles in all lanes and has a long measurement distance, there is a problem of an influence of snow, rain, fog, dust, etc. and a decrease in detection rate at night.

The radar type is a type in which a radar signal is emitted and then a signal reflected by a driving vehicle is processed to calculate a speed of a vehicle, and has advantages of being able to control vehicle speeding in all lanes and not being affected by weather or climate.

Radar parameters vary depending on the measurement distance, and when installed on a tall structure, an installation angle needs to be adjusted to be appropriate for the measurement distance. Therefore, in the case of the radar type, it is difficult to change the measurement distance after installation. However, since speeding vehicles avoid enforcement by reducing speed only in the speed trap area, it is necessary to easily change the measurement distance in the radar type.

### SUMMARY OF THE INVENTION

Therefore, the present invention has been made in view of the above problems, and it is an object of the present invention to provide a speed camera-assisting radar device capable of automatically changing a speed trap area according to a change in an installation angle of a speed camera and measuring a speed of a vehicle passing through the area.

A speed camera-assisting radar device according to an aspect of the present invention includes a gravity sensor unit, a radar sensor unit, and a radar setting unit.

The gravity sensor unit detects a change in an installation angle of the device and measures a changed angle.

The radar sensor unit includes a plurality of transmitting antennas and receiving antennas to measure a speed of a vehicle in consecutive frames in a first section, a second section, or a third section according to radar profile setting.

The radar setting unit automatically sets the radar sensor unit to a first section measurement radar profile, a second section measurement radar profile, or a third section measurement radar profile according to an installation height, an initial installation angle, or a changed installation angle of the device.

According to another aspect of the present invention, the radar setting unit may set the radar sensor unit to a first multi-mode radar profile in which a speed of a vehicle is allowed to be measured in a first section and a second section when the installation angle of the device falls within a first range, and set the radar sensor unit to a second multi-mode radar profile in which the speed of the vehicle is allowed to be measured in the second section and a third section when the installation angle of the device falls within a second range.

In this instance, when the radar sensor unit is set to the first or second multi-mode radar profile, the radar sensor unit may divide time within one frame to measure the vehicle speed in each section.

According to still another aspect of the present invention, when the radar sensor unit is set to the first or second multi-mode radar profile, the radar sensor unit may measure the vehicle speed in each section while crossing on a frame basis.

In addition, when the radar sensor unit is set to the first or second multi-mode radar profile, the radar sensor unit may measure the vehicle speed in each section by separately assigning the transmitting antennas and receiving antennas for each section.

According to yet another aspect of the present invention, the radar sensor unit may cluster point clouds generated for each frame to generate a speed measurement target, then track the target in consecutive frames, and calculate a speed from a moving distance of the measurement target between frames.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates an example of a speed trap area according to an installation angle of a speed camera-assisting radar device of the present invention;
FIG. 2 is a block diagram of the speed camera-assisting radar device according to one aspect of the present invention;
FIG. 3 illustrates a concept of correcting a speed of a vehicle measured in a measurement section;
FIG. 4 illustrates a concept of transmitting a radar waveform signal when measuring speeds in two sections using a time division method; and
FIG. 5 illustrates a concept of transmitting radar waveform signals when measuring speeds in two sections using a frame crossing method.

### DETAILED DESCRIPTION OF THE INVENTION

The foregoing and additional aspects are embodied through embodiments described with reference to the accompanying drawings. It is understood that various combinations of components of each embodiment are possible within the embodiment as long as there is no other mention or contradiction therebetween. In some cases, each block in a block diagram may represent a physical part, but in other cases, each block may be a logical expression of a portion of a function of one physical part or a function across a plurality of physical parts. Sometimes the entity of a block or part thereof may be a set of program instructions. All or some of these blocks may be implemented by hardware, software, or a combination thereof.

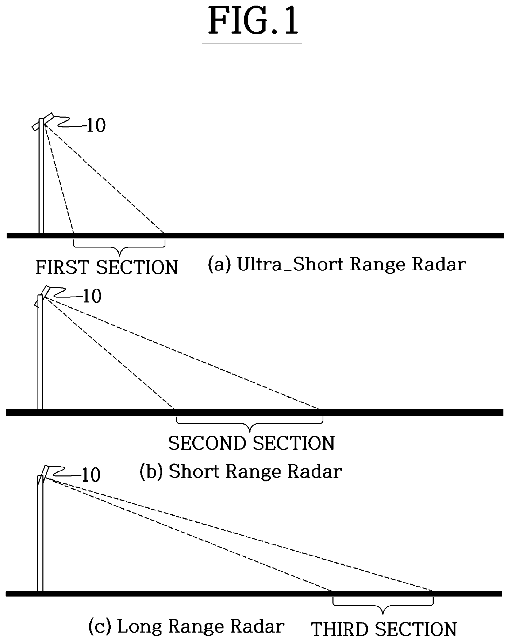

FIG. 1 illustrates an example of a speed trap area according to an installation angle of a speed camera-assisting radar device of the present invention. A speed camera-assisting radar device 10 of the present invention, which is used together with a speed camera device to measure a speed of a vehicle, generally measures the speed of the vehicle according to a distance from a section in which speeds are measured, that is, a speed trap area. FIG. 1A illustrates that the speed camera-assisting radar device 10 is set to ultra-short range radar (USRR) to measure a speed of a vehicle in a first section, which is a speed trap area at a distance of 10 m to 20 m from the device 10, and the speed of the vehicle is measured in the corresponding section, FIG. 1B illustrates that the same device 10 is set to short range radar (SRR) to measure a speed of a vehicle in a second section, which is a speed trap area at a distance of 30 m to 120 m from the device 10, and the speed of the vehicle is measured in the corresponding section, and FIG. 1C illustrates that the same device 10 is set to long range radar (LRR) to measure a speed of a vehicle in a third section, which is a speed trap area at a distance of 130 m to 200 m from the device 10, and the speed of the vehicle is measured in the corresponding section. When the speed camera device is installed on a high structure on the road, the assisting radar device 10 is also installed on the high structure in a direction facing the road. The speed camera-assisting radar device 10 is selected as USRR, SRR, or LRR depending on the speed trap area in which the device performs control, or a radar parameter is set, and an angle is adjusted to be appropriate for the speed trap area. USRR has a speed trap area at a short distance, and thus an installation angle thereof facing the road is larger than that of the SRR and LRR, and LRR has the smallest installation angle. In addition, considering a height of the structure where the radar device is installed and an FOV of radar, each radar device has an installation angle range appropriate for the speed trap area at the installation height. When the radar device is installed outside of this range, appropriate speed measurement may not be performed for the speed trap area. For example, when LRR is installed at a USRR installation angle, it may be impossible to measure the vehicle speed in the target speed trap area due to the narrow FOV.

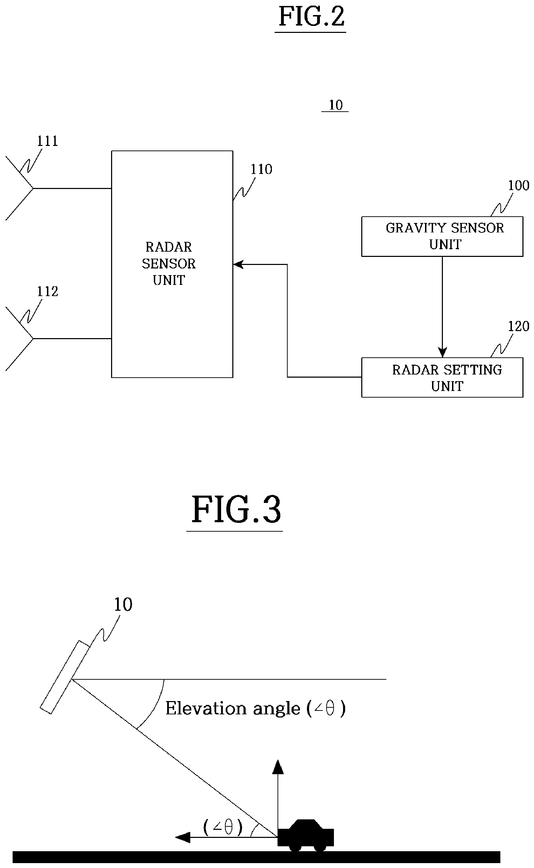

FIG. 2 is a block diagram of the speed camera-assisting radar device according to one aspect of the present invention. The speed camera-assisting radar device 10 according to one aspect of the present invention includes a gravity sensor unit 100, a radar sensor unit 110, and a radar setting unit 120.

The speed camera-assisting radar device 10 is preferably included in one housing as a part of the speed camera device. However, the present invention is not limited thereto and the speed camera-assisting radar device 10 may be configured to have a separate housing.

The speed camera-assisting radar device 10 of the present invention measures a speed of a vehicle in front in a direction approaching the device or a speed of a vehicle in a rear in a direction away from the device, depending on the installation direction.

The present invention may measure speeds of a plurality of vehicles and may simultaneously measure speeds for a plurality of lanes.

The present invention is an assisting radar device for the speed camera, and thus ultimately outputs location information, lane information, and speed information for a vehicle violating a speed limit. The speed camera obtains additional information about the vehicle violating the speed limit (for example, license plate) by mapping the corresponding information to an image.

Even though an expression "vehicle" is used in this specification, in addition to vehicles generally classified as cars, the expression "vehicle" includes two-wheeled motorcycles that need to be subjected to speed control.

The gravity sensor unit 100 detects a change in the installation angle of the speed camera-assisting radar device 10 and measures a changed angle. The gravity sensor unit 100 includes a MEMS gravity sensor and obtains a current installation angle of the camera assisting radar device 10 from output of the MEMS gravity sensor. The MEMS gravity sensor included in the gravity sensor unit 100 may be a 6-axis gyro acceleration sensor combined with a gyro sensor.

Using the current installation angle of the speed camera-assisting radar device 10 detected by the gravity sensor unit 100, it is possible to correct a speed and determine a speed trap area mode (a first section control mode, a second section control mode, and a third section control mode).

The radar sensor unit 110 includes a radar signal processing circuit including a plurality of transmitting antennas 111 and receiving antennas 112 to measure the speed of the vehicle in continuous frames in the first section, the second section, or the third section according to radar profile settings.

The radar sensor unit 110 is frequency modulated continuous wave (FMCW)-type radar.

The radar sensor unit 110 includes a DSP, which is an application processor, to process radar signals output through the plurality of transmitting antennas 111, reflected from a target, and received by the plurality of receiving antennas 112, thereby obtaining Doppler and distance data every frame and generating a point cloud.

The radar sensor unit 110 sequentially transmits radar waveform signals through the transmitting antennas 111, and processes and outputs signals received through the receiving antennas 112. The transmitting antenna 111 and the receiving antennas 112 may be patch array antennas.

The radar sensor unit 110 generates a radar waveform signal through a variable frequency oscillator according to a modulation/demodulation control signal. As an example, the radar sensor unit 110 generates and outputs an FMCW radar waveform signal whose frequency linearly rises and falls during a period referred to as a chirp according to the modulation/demodulation control signal through the variable frequency oscillator.

Radar waveform signals transmitted through the transmitting antennas 111 are reflected from the vehicle and received by the receiving antennas 112.

The radar sensor unit 110 amplifies and demodulates radar waveform signals received through the receiving antennas 112 with low noise, converts the radar waveform signals into baseband signals, and converts the baseband signals into digital signals through analog-to-digital conversion.

The radar sensor unit 112 processes the digital signals converted through the DSP and outputs distance data (range) and Doppler. The DSP may measure data of a distance to the vehicle and Doppler by measuring a delay value and Doppler shift by comparing the transmitted FMCW radar waveform signal and the received FMCW radar waveform signal.

In addition, the radar sensor unit 110 performs cartesian conversion on the distance data and Doppler acquired by processing the digital signals, and performs angle correction according to the speed and correction according to an installation location of the device to finally generate a point cloud. The point cloud generated by the radar sensor unit 110 is a four-dimensional point cloud that includes three-dimensional coordinates and Doppler.

The radar sensor unit 110 clusters the generated point cloud to generate point clusters of vehicles, thereby separating the vehicles. The radar sensor unit 110 may generate the point clusters by clustering the point cloud using a DBSCAN algorithm. The DBSCAN algorithm is a density-based clustering algorithm. When m or more points are present within a distance e (epsilon) from a point p, this point is set as a core point to recognize m points as one cluster. When less than m points belonging to the cluster based on the point p are present within the distance e from the point, the point is referred to as a border. The DBSCAN algorithm is an algorithm that repeats this process on each point and connects core points when one core point is within the distance e from the other core point to bundle and cluster the core points as one cluster. However, the radar sensor unit 110 may perform clustering using other algorithms in addition to the DBSCAN algorithm. For example, the radar sensor unit may use the K-Means or hierarchical clustering algorithms.

The radar sensor unit 110 tracks separated vehicles within consecutive frames and calculates a speed (average or maximum) in each frame. Since the speed camera-assisting radar device 10 is not installed in parallel to the road, a Doppler speed needs to be corrected according to the installation angle.

FIG. 3 illustrates a concept of correcting a speed of a vehicle measured in a measurement section. The radar sensor unit 110 obtains an elevation angle of a vehicle in the speed trap area as illustrated in FIG. 3, and calculates a speed of the vehicle through correction using a horizontal component of a Doppler speed in an eye direction of the vehicle with respect to radar using the elevation angle.

The radar sensor unit 110 calculates the speed of the vehicle driving in the first section, the second section, or the third section according to a currently set speed trap area mode.

The radar setting unit 120 automatically sets the radar sensor unit 110 to a first section measurement radar profile, a second section measurement radar profile, or a third section measurement radar profile according to an installation height and an initial installation angle or a changed installation angle of the speed camera-assisting radar device 10.

When drivers recognize the speed trap area, there is a problem that the drivers drive while avoiding speeding crackdowns by slowing down only in the corresponding section. It is necessary to change the speed trap area in which speeds are measured so that the drivers are prevented from avoiding the crackdowns.

It is possible to change the installation angle of the speed camera-assisting radar device 10 installed under the control of an administrator.

In addition, the installation angle may be changed by a strong wind, etc. in the state where the speed camera-assisting radar device 10 is installed.

As such, when the installation angle of the installation angle of the speed camera-assisting radar device 10 is changed for some reason, it may be necessary to change the speed trap area due to the angle change. When the speed trap area needs to be changed due to the change in the installation angle, the present invention may automatically change the speed trap area through the radar setting unit 120.

The radar setting unit 120 determines an optimal speed trap area according to the installation height and the current installation angle of the speed camera-assisting radar device 10, and automatically sets a radar parameter of the radar sensor unit 110 appropriate for the speed trap area. For example, when the installation angle is changed while the radar sensor unit 110 is currently set to optimally measure a speed in the second section, and thus speed measurement is appropriate in the first section, the radar setting unit 120 sets the radar sensor unit 110 to the first section measurement radar profile so that the radar sensor unit 110 measures a speed in the first section.

Likewise, upon initial installation, the radar setting unit 120 determines the optimal speed trap area according to the installation height and current installation angle of the speed camera-assisting radar device 10, and automatically sets a radar parameter of the radar sensor unit 110 according to the speed trap area. Even when the administrator does not separately set the radar parameter of the radar sensor unit after initial installation of the speed camera-assisting radar device 10, the radar setting unit 120 determines the optimal speed trap area according to the current installation angle and sets the radar sensor unit to be appropriate for the speed trap area.

In this instance, examples of the radar parameter set by the radar setting unit 120 include sweep bandwidth, chirp signal ramp slope, inter-chirp duration, the number of chirps, chirp duration, range resolution, max beat frequency, etc. The sweep bandwidth, chirp signal ramp slope, inter-chirp duration, and chirp duration are largest in the first section measurement radar profile and smallest in the third section measurement radar profile. Conversely, the number of chirps and range resolution are smallest in the first section measurement radar profile and largest in the third section measurement radar profile.

Depending on the aspect of the invention, the speed camera-assisting radar device 10 may measure speeds in two speed trap areas at the same time depending on the installation angle. For control in the two speed trap areas, the speed camera-assisting radar device 10 may measure a speed for one frame using a time division method with settings appropriate for each speed trap area, or may use a method of measuring a speed with settings appropriate for one speed trap area and measuring a speed with settings appropriate for the other speed trap area while crossing on a frame basis.

According to another aspect of the present invention, the radar setting unit 120 may set the radar sensor unit 110 to a first multi-mode radar profile in which vehicle speeds may be measured in the first section and the second section when the installation angle is within a set first range, and may set the radar sensor unit 110 to a second multi-mode radar profile in which vehicle speeds may be measured in the second section and the third section when the installation angle is within a second range.

In this instance, the first range in which the radar sensor unit 110 is set to the first multi-mode radar profile, in which vehicle speeds may be measured in the first section and the second section, may be set based on the installation height of the speed camera-assisting radar device 10, an FOV when the first section measurement radar profile is set, and an FOV when the second section measurement radar profile is set. Likewise, the second range in which the radar sensor unit 110 is set to the second multi-mode radar profile, in which vehicle speeds may be measured in the second section and the third section, may be set based on the installation height of the speed camera-assisting radar device 10, an FOV when the second section measurement radar profile is set, and an FOV when the third section measurement radar profile is set.

In this instance, when the radar sensor unit 110 is set to the first or second multi-mode radar profile, it is possible to measure a vehicle speed in each section by dividing time within one frame.

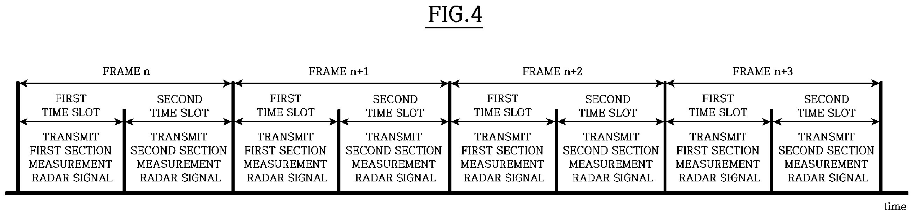

FIG. 4 illustrates a concept of transmitting a radar waveform signal when measuring speeds in two sections using a time division method. In an example illustrated in FIG. 4, when the radar sensor unit 110 is set to the first multi-mode radar profile, for each frame, the first section measurement radar profile is set to transmit a radar waveform signal capable of measuring a speed in the first section during a first time slot, and the second section measurement radar profile is set to transmit a radar waveform signal capable of measuring a speed in the second section during a second time slot. In this instance, adding times of the first time slot and the second time slot results in a time of one frame.

According to another aspect of the present invention, when the radar sensor unit 110 is set to the first or second multi-mode radar profile, a vehicle speed may be measured in each section while crossing on a frame basis.

Unlike FIG. 4, when the radar sensor unit 110 is set to the first or second multi-mode radar profile, a vehicle speed may be measured in each section alternately for each frame by changing radar profile settings on a frame basis.

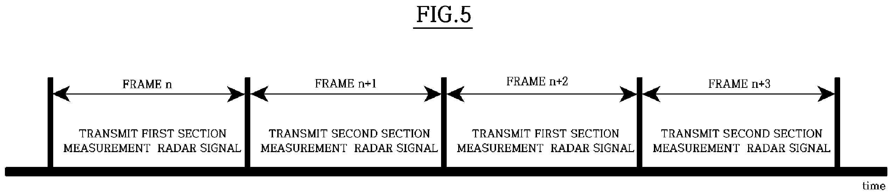

FIG. 5 illustrates a concept of transmitting radar waveform signals when measuring speeds in two sections using a frame crossing method. In an example illustrated in FIG. 5, when the radar sensor unit 110 is set to the first multi-mode radar profile, the first section measurement radar profile is set to transmit a radar waveform signal capable of measuring a speed in the first section during an nth frame, and the second section measurement radar profile is set to transmit a radar waveform signal capable of measuring a speed in the second section during an (n+1)th frame. The first section measurement radar profile is set again during an (n+2)th frame.

Depending on the aspect of the invention, when the radar sensor unit 110 is set to the first or second multi-mode radar profile, a vehicle speed may be measured in each section by separately assigning the transmitting antennas and the receiving antennas for each section.

That is, in this aspect, the radar sensor unit 110 may divide the plurality of transmitting antennas, set some of the transmitting antennas to one radar profile, set some of the remaining transmitting antennas to another radar profile, and then transmit radar waveform signals using the time division method shown in FIG. 4 or the frame crossing method shown in FIG. 5.

According to another aspect of the present invention, the radar sensor unit 110 may cluster point clouds generated for each frame to generate a speed measurement target, then track the target in consecutive frames, and calculate a speed from a moving distance of the measurement target between frames.

In this aspect, rather than measuring a vehicle speed by correcting a Doppler speed, a vehicle is tracked in consecutive frames and a speed is measured by calculating an average speed of the vehicle from a moving distance of the vehicle between respective frames.

For example, when the radar sensor unit 110 measures a speed at 25 frames per second, the vehicle travels at a speed of 120 km per hour and passes 6.6 m for 5 consecutive frames (0.2 seconds), and thus a vehicle speed is measured by calculating a moving distance from a distance of the vehicle tracked for each frame.

According to the present invention, when an installation angle of a speed camera changes, a speed trap area may be automatically changed accordingly to measure a speed of a vehicle passing through the corresponding section.

The various embodiments disclosed in this specification and drawings are merely presented as specific examples to aid understanding, and are not intended to limit the scope of the various embodiments of the present invention.

Therefore, in addition to the embodiments described herein, all changes or modified forms derived based on the technical idea of the various embodiments of the present invention should be interpreted as being included in the scope of the various embodiments of the present invention.

## Claims

1. A speed camera-assisting radar device comprising:
a gravity sensor unit configured to detect a change in an installation angle of the device and measure a changed angle;
a radar sensor unit including a plurality of transmitting antennas and receiving antennas to measure a speed of a vehicle in consecutive frames in a first section, a second section, or a third section according to radar profile setting; and
a radar setting unit configured to automatically set the radar sensor unit to a first section measurement radar profile, a second section measurement radar profile, or a third section measurement radar profile according to an installation height, an initial installation angle, or a changed installation angle of the device.

2. The speed camera-assisting radar device according to claim 1, wherein:
the radar setting unit sets the radar sensor unit to a first multi-mode radar profile in which a speed of a vehicle is allowed to be measured in a first section and a second section when the installation angle of the device falls within a first range, and sets the radar sensor unit to a second multi-mode radar profile in which the speed of the vehicle is allowed to be measured in the second section and a third section when the installation angle of the device falls within a second range, and
when the radar sensor unit is set to the first or second multi-mode radar profile, the radar sensor unit divides time within one frame to measure the vehicle speed in each section.

3. The speed camera-assisting radar device according to claim 1, wherein:
the radar setting unit sets the radar sensor unit to a first multi-mode radar profile in which a speed of a vehicle is allowed to be measured in a first section and a second section when the installation angle of the device falls within a first range, and sets the radar sensor unit to a second multi-mode radar profile in which the speed of the vehicle is allowed to be measured in the second section and a third section when the installation angle of the device falls within a second range, and
when the radar sensor unit is set to the first or second multi-mode radar profile, the radar sensor unit measures the vehicle speed in each section while crossing on a frame basis.

4. The speed camera-assisting radar device according to claim 2 or 3, wherein, when the radar sensor unit is set to the first or second multi-mode radar profile, the radar sensor unit measures the vehicle speed in each section by separately assigning the transmitting antennas and receiving antennas for each section.

5. The speed camera-assisting radar device according to claim 1, wherein the radar sensor unit clusters point clouds generated for each frame to generate a speed measurement target, then tracks the target in consecutive frames, and calculates a speed from a moving distance of the measurement target between frames.
